# EUROPEAN PATENT APPLICATION

(11) **EP 4 113 755 A1**
(43) Date of publication of application: **04.01.2023**
(21) Application number: 22181718.2
(22) Date of filing: 29.06.2022
(51) Int. Cl.: H01R 13/52

(54) **SEAL FOR AN ELECTRICAL CONNECTOR WITH REDUCED INSERTION FORCE**

(30) Priority: 29.06.2021 DE 102021116675
(71) Applicant: TE Connectivity Germany GmbH, 64625 Bensheim (DE)
(72) Inventor: MECHTERIDIS, Dimitrios, 64625 Bensheim (DE); WALZ, Andreas, 64625 Bensheim (DE)
(74) Representative: Grünecker Patent- und Rechtsanwälte PartG mbB

(57) **Abstract**

The invention relates to a seal (1) for an electrical connector (66), wherein the seal (1) comprises a sealing surface (8) and a bearing surface (10) arranged opposite the sealing surface (8), wherein the seal (1) has on the sealing surface side a plurality of projecting sealing lips (12) arranged next to one another and on the bearing surface side a plurality of recesses (14) arranged next to one another between projecting support lips (18). The support lips (18) are arranged offset from the sealing lips (12) and each sealing lip (12) is arranged opposite a recess (14).

## Description

The invention relates to a seal for an electrical connector.

Electrical connectors are used in numerous fields of technology to create detachable connections for the transmission of electrical currents and/or signals. For this purpose, the electrical connectors may be mated with a mating connector. For reasons of electrical safety and for improved handling, the electrical connectors usually have a respective housing with an interior, from which electrically conductive contact elements emerge, thereby establishing mutual electrical contact of the connectors to be connected to one another. Electrical connectors are used in vehicles in various fields and are exposed to harsh environmental conditions. To prevent liquids and/or dirt from penetrating into the interior of the housing, a seal is provided between the connector and the mating connector. The problem here, however, is that a high insertion force must be overcome in order to push the mating connector past the seal.

Consequently, the present invention is based on the object of providing a seal for an electrical connector that permits a reduced insertion force with a high sealing effect.

According to the invention, this object is addressed by a seal for an electrical connector, wherein the seal includes a sealing surface and a bearing surface opposite the sealing surface. On the sealing surface side, a plurality of sealing lips arranged next to one another project, and on the bearing surface side, a plurality of recesses located next to one another are arranged between projecting support lips. Each sealing lip faces a recess.

The present invention is advantageous since the seal may rest with its support lips on the housing of the electrical connector. Consequently, the support lips may serve as a support, as in the case of a bending beam. If the connector is now mated with the mating connector, the mating connector slides past the sealing lips and presses them towards the bearing surface. The support lips allow the sealing lips to be pressed towards the bearing surface by applying a small amount of force. In the mated state, the sealing lips press against the mating connector, where they are supported by the support lips and thus achieve a high sealing force and/or sealing effect. Since the sealing lips face a recess, the seal may deflect in the direction of the bearing surface when the sealing lip is pressed in that direction by the mating connector.

Further embodiments are described below, which may be combined independently of one another as desired and which are advantageous when considered separately.

For example, the seal may be a radial seal and be configured as a sealing ring. In this case, the bearing surface may form a radially inner side of the sealing ring and the sealing surface may form a radially outer side. In an alternative embodiment, the radially outer side of the sealing ring may form the bearing surface and the radially inner side may form the sealing surface. Consequently, the sealing lips may protrude in a radial direction on the sealing surface side.

The seal may also be configured as an end face seal, in which case the sealing surface and bearing surface are each formed by a front face pointing in the insertion direction and a rear face pointing away from the insertion direction. In this case, the sealing lips protrude in the axial direction.

For the purposes of the application, the description of the features of the seal may refer to an non-deformed state of the seal unless otherwise indicated.

According to an advantageous embodiment, a plurality of sealing lips may be arranged side by side with bases arranged between adjacent protruding sealing lips. Preferably, the sealing lips may taper in a direction away from the bearing surface. In particular, the sealing lips may taper in a step-free manner toward a vertex such that the sealing surface has an undulating profile, in particular a sinusoidal profile.

If the sealing surface and the bearing surface each have a sinusoidal profile, at least in sections, the sinusoids may be arranged parallel to one another.

In particular, the support lips may be arranged offset in the radial direction and in the axial direction relative to the sealing lips. According to an advantageous embodiment, all support lips may be arranged offset from all sealing lips.

In an exemplary embodiment, the recess may taper in the direction towards the sealing surface. In particular, the recesses may taper continuously toward a base in the direction of the sealing surface. In particular, the support lips and the recesses may merge into one another without any steps, so that the bearing surface has a corrugated, in particular sinusoidal profile, at least in sections.

According to a particularly advantageous embodiment, the sealing lips may have vertices that are offset from the vertices of the support lips. The elasticity of the seal may be further improved if the vertices of the sealing lips are aligned with the bases of the recesses and/or the vertices of the support lips are aligned with the bases between the sealing lips.

The sealing lips may project in a direction away from the support lips, and the support lips may project in a direction away from the sealing lips. In this regard, the support lips may be offset from the seal lips substantially perpendicular to the direction, in which the sealing lips project away from the support lips.

For easier handling of the seal, the seal may be symmetrical, in particular axially symmetric with respect to an axis of symmetry aligned parallel to a distance between the bearing surface and sealing surface. In particular, the axis of symmetry may extend from a base to an opposite vertex. Accordingly, an assembly direction, in which the seal may be placed on the connector, is freely selectable, whereby the number of incorrectly assembled connectors with seals may be reduced. In this case another advantage is that defects or consequential damage may not be caused by a faulty assembly of the seal, making it easier to resolve warranty disputes.

In order to improve the fit of the seal on the connector, for example in a groove provided for the seal, the seal may be provided with at least one stop shoulder projecting perpendicularly to the sealing lip. In particular, the at least one stop shoulder may protrude at one of the two ends of the seal substantially in a direction perpendicular to the sealing lip, in particular perpendicular to a height line of the sealing lips. Preferably, a stop shoulder projecting perpendicularly to the sealing lip may be provided at each of the two ends of the seal. If the seal is a radial seal, for example, the stop shoulders may be arranged at the axial ends of the seal. In the case of an end face axial seal, the stop shoulders may be arranged at the radial ends of the seal.

Preferably, the at least one stop shoulder on the sealing surface may be located in a common plane with the bases between the sealing lips. Additionally or alternatively, the at least one stop shoulder on the bearing surface may be located in a common plane with the support lips. In particular, the at least one stop shoulder on the bearing surface may be adjacent to a recess and thus serve as an additional support lip arranged at the corresponding end of the seal. By arranging the support lips on the bearing surface with the at least one stop shoulder in a common plane, a stable fit of the seal may be ensured and tilting of the seal during the mating process may be prevented.

The seal may have any number of sealing lips and support lips. In particular, in this case, all of the sealing lips may be arranged offset from all of the support lips. Thus, the vertices of all of the sealing lips may be aligned with respect to the bases of the recesses. Furthermore, the vertices of the support lips may be aligned with respect to the bases at the sealing surface between the sealing lips.

During the mating process, there is a risk of the seal being tilted in the insertion direction since the sealing lips are each pulled along in the insertion direction by the mating connector. This means that the seal may no longer be guaranteed to be securely seated. To prevent such tilting, it is particularly advantageous if a height of the sealing lips is less than a height of the rest of the seal, in particular less than the height between the vertex of the bearing surface and the base of the sealing surface. According to a particularly advantageous embodiment, the height from the vertex of the support lip to the opposite base may correspond to a ratio of about 2:3 with respect to a total height of the seal. In this way the height of the sealing lips makes up about one third of the total height of the seal.

It is particularly advantageous if the sealing lips are spaced apart from one another, since the sealing lips may escape into a space formed between the sealing lips during the mating process. In particular, an air cushion forms between the sealing lips in the gap when mated, which may have an advantageous effect on the sealing action.

Electrical connectors are used, for example, in various areas of a vehicle, in particular a motor vehicle, where they are exposed to harsh environmental influences. To reduce the amount of maintenance required, durability of the seal over the entire service life of the connector and/or the vehicle is required. If the sealing lips were to stick together during the mating process and form a lump, this would have a negative effect on the sealing effect and the service life of the seal in use. According to a particularly advantageous embodiment, the height of the sealing lips may be less than or equal to a distance between the sealing lips. The distance between the sealing lips may be defined by the distance between the vertices of the adjacent sealing lips. It is particularly advantageous if the height of the sealing lips is less than or equal to half the distance between the sealing lips.

Preferably, all the sealing lips may have the same height, which results in an even distribution of the contact pressure on the sealing lips. Accordingly, all recesses may have the same depth and all support lips may be arranged on a common plane. Accordingly, in the non-deformed state, the seal rests on the electrical connector via the support lips.

At least the central sealing lips may be symmetrical and have a cross-section corresponding to an isosceles triangle. In particular, the central sealing lips may be configured to be axially symmetric. The outer sealing lips may also be substantially triangular in shape. Preferably, at least one of the outer sealing lips is asymmetrically configured, wherein the leg of at least one outer sealing lip facing outward away from the remaining sealing lips extends at a smaller angle toward the vertex than the leg of the at least one outer sealing lip facing toward the remaining sealing lips. Therefore, the at least one outer sealing lip has an outwardly flattened approach bevel. During the mating process, the mating connector may slide along the approach bevel, preventing the sealing lip from being pulled along with the mating connector in the insertion direction.

According to an advantageous embodiment, the side of the outer sealing lip facing the adjacent sealing lip may extend substantially at the same angle to the vertex as the sides of the central sealing lips.

The invention further relates to an electrical connector having a seal according to any of the preceding descriptions.

Hereinafter, the invention is described in more detail by way of examples of embodiments with reference to the accompanying figures. In the figures, elements corresponding to one another in terms of structure and/or function are provided with the same reference signs.

The combinations of features shown and described in the individual exemplary embodiments are for explanatory purposes only. According to the above, a feature of an embodiment may be omitted if its technical effect is not important for a particular application. Conversely, according to the above embodiments, an additional feature may be added to an embodiment if its technical effect should be advantageous or necessary for a particular application.

In the drawings:
- Fig. 1: is a schematic sectional view of an exemplary embodiment of a seal according to the invention;
- Fig. 2: is a schematic sectional view of the seal shown in Fig. 1 in a connector arrangement in a non-mated state; and
- Fig. 3: is a schematic sectional view of the seal shown in Fig. 1 in a connector arrangement in a mated state.

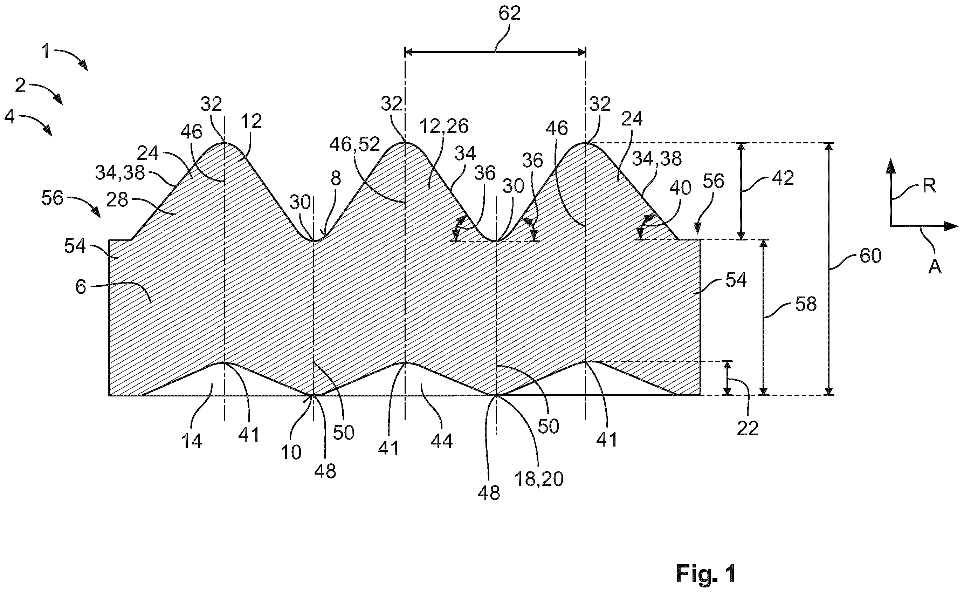

In Fig. 1, a seal 1, preferably formed from an elastomer, is shown in an axial sectional plane arranged substantially parallel to the drawing plane. In this exemplary embodiment, the seal 1 is configured as a sealing ring 2 in the form of a radial seal 4. For clarity, the circumferential lines are not drawn in the figures. In particular, the seal 1 may be configured to be rotationally symmetrical about a central axis, which is why only one section of the seal 1 is shown in each of the figures. The seal 1 is preferably formed in one piece as a monolithic component 6.

The seal 1 includes a sealing surface 8 and a bearing surface 10 opposite the sealing surface 8. A plurality of sealing lips 12 protrude from the sealing surface 8, while the bearing surface 10 is provided with recesses 14 arranged between protruding support lips 18. In this case, the support lips 18 are arranged offset from the sealing lips 12, with the sealing lips 12 being arranged opposite a recess 14. In particular, each sealing lip 12 may face exactly one recess 14.

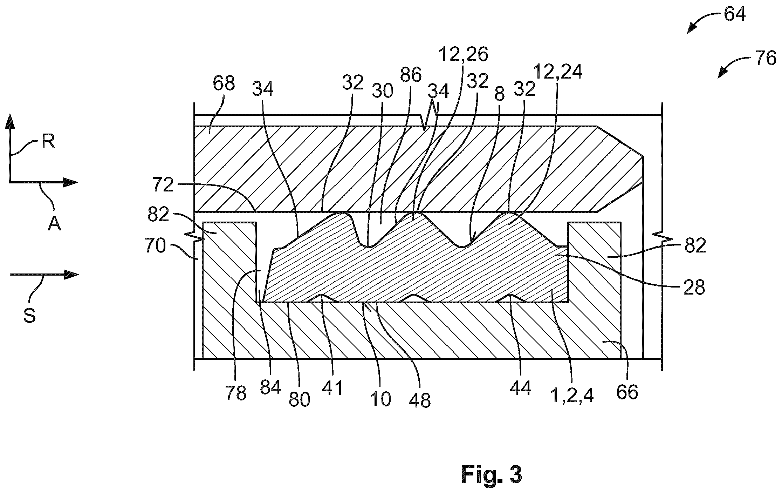

The elasticity of the seal 1 may be improved by the mutually offset arrangement of the support lips 18 and the sealing lips 12. If the sealing lip 12 is pressed in the direction towards the bearing surface 10, the support lips 18 act like contact faces 20 in a bending beam. Consequently, the force acting on the sealing lip 12 may be redirected to adjacent contact faces 20, allowing the sealing lip 12 to deflect in the direction of the recess 14. In this case, the recess 14 bulges, causing a depth 22 of the recess 14 to decrease. The depth 22 may decrease, for example, such that in the mated state shown in Fig. 3, it abuts the connector.

In the exemplary embodiment, the seal 1 is shown as a radial seal 4. In an alternative embodiment not shown, the seal 1 may also be configured as an axial seal. In this case, the sealing lips 12 would not project in the radial direction, as will be described below, but in the axial direction.

In the radial seal 4, the sealing surface 8 is arranged radially on the outside and the bearing surface 10 is arranged radially on the inside. Here, three sealing lips are provided that are spaced axially from one another and project radially outwards. Two sealing lips 24 of the three sealing lips 12 are arranged on the outside in the axial direction A and a central sealing lip 26 is arranged between the outer sealing lips 24. It is also possible, however, for the seal 1 to have more than three sealing lips 12, in which case the number of central sealing lips 26 arranged between the outer sealing lips 24 increases.

Preferably, the sealing lips 12 are arranged in such a way that adjacent sealing lips 12 converge, at their base 28 facing the bearing surface, towards a common base 30. Consequently, the seal at the sealing surface 8 may have a substantially undulating, in particular sinusoidal, profile with stepless transitions. In particular, the sealing lips 12 may be substantially triangular in shape, converging outwardly in the radial direction R to a vertex 32.

Preferably, the central sealing lip 26 is symmetrical, in particular it has a cross-section of a substantially isosceles triangle, so that both legs 34 converge at the same angle 36 to the vertex 32.

The exterior sealing lips 24, or at least one of the exterior sealing lips 24, may have a substantially asymmetrical configuration. In order to prevent the outer sealing lip 24 from being pulled along by the mating connector during the mating process, the exterior sealing lip 24 may form an approach bevel 38 with its leg 34 pointing away from the remaining sealing lips 12 in the axial direction A. The leg 34 of the exterior sealing lip 24 may be configured in such a way that it may be pulled along by the mating connector during the mating process. In this case, the leg 34 is configured in particular in such a way that it tapers towards the vertex at a shallower angle 40 than the angle 36, at which the legs 34 of the central sealing lip 26 taper towards the vertex 32. Preferably, the leg 34 of the exterior sealing lip 24 facing the central sealing lip 26 may taper towards the vertex 32 at the same angle 36 as the legs 34 of the central sealing lip 24.

The recesses 14 in the bearing surface 10 also have a substantially triangular cross-section with the recesses 14 tapering towards a base 41 in the direction of the sealing surface 8. The depth 22 of the recesses 14 may be less, in particular, than a height 42 of the sealing lips 12 in the radial direction R. The recesses 14 form an escape reservoir 44, into which the material of the seal 1 may be deflected inwardly when the sealing lips 12 are subjected to a load in the radial direction R.

An optimum arrangement of the recesses 14 is obtained when the bases 41 of the recesses 14 are located on an alignment line 46 with respect to the vertices 32 of the seal lips 12, the alignment line 46 being arranged substantially parallel to the radial direction R in the case of the radial seal 4. In each case, a recess may be associated with a sealing lip. The recesses 14 may each have the same depth 22 and widen radially inwards from the corresponding bases 41. In this case, support lips 18 are arranged between the recesses 14 and form a vertex 48 on the bearing surface, with which the seal 1 may bear against the connector in the non-deformed state. Preferably, the recesses transition into the support lips 18 substantially without steps.

The vertices 48 of the corresponding support lips 18 may thereby preferably be positioned in such a way that they are arranged with the bases 30 between the sealing lips 12 on an alignment line 50 that extends substantially parallel to the radial direction. This results in an optimum arrangement of the sealing lips and the support lips, thereby allowing to further increase the elasticity of the seal 1. Consequently, the insertion forces required to mate the connector with the mating connector may be further reduced.

In order to prevent the seal 1 from being inserted in an incorrect position on the connector, the seal 1 may preferably be symmetrical, in particular axially symmetric. Therefore, the seal 1 has an axis of symmetry 52 arranged parallel to the alignment line 46 extending through the central sealing lip 26. In particular, the axis of symmetry 52 may overlap with the alignment line 46 extending through the central sealing lip 26.

In order to improve the fit of the seal 1 to the connector, the seal 1 may be provided with axially projecting stop shoulders 54. The stop shoulder 54 may be aligned at the sealing surface 8 on a plane with the bases 30 between the sealing lips 12. It is particularly advantageous if the stop shoulders 54 are arranged on the bearing surface 10 on a plane with the bearing surface 10 at the support lips 18, in particular at their vertices 32. Consequently, in the non-deformed state, the seal 1 rests on the connector with its ends 56 located in the axial direction A. Accordingly, it may be prevented that the seal 1 is levered open and tilted in the insertion direction when the connector is mated with the mating connector.

Preferably, the edge zones 16 of the outer legs of the outer recesses 14 in the axial direction A may extend to the stop shoulder 54 and, together with the stop shoulder, form an outer support lip 18.

If tilting of the seal 1 in the insertion direction is to be prevented, it is particularly advantageous if the height 42 of the sealing lips 12 is less than a height 58 from the vertex 48 of the support lips 18 to the opposite base 30 between the sealing lips 12. In particular, the height 58 from the vertex 48 of the support lips 18 to the opposing base 30 between the sealing lips 12 may correspond to a ratio of about 2:3 with respect to an overall height 60 of the seal 1. Accordingly, the seal 1 has a stable, relatively rigid base that resists tilting of the seal 1 in the insertion direction during the mating process.

According to a further advantageous embodiment, the sealing lips may be configured in such a way that they do not stick to each other in the mated state. This may be achieved, for example, if the sealing lips 12 have a height 42 that is less than or equal to a distance 62 between the adjacent sealing lips 12. In this case, the distance 62 is defined as the distance parallel to the axial direction A between the vertices 32 of the adjacent sealing lips 12. The distance 62 may preferably be about twice the height 42 of the sealing lips. Since, according to this embodiment, the sealing lips 12 are prevented from being deflected to a stop at the adjacent sealing lip 12, a clumping together of the sealing lips 12 may be avoided. Such clumping together would drastically reduce the sealing effect as well as the lifetime of the seal 1.

In order to evenly distribute the contact force on the mating connector, the sealing lips may have the same height 42. Furthermore, for a stable fit at least in the non-deformed state of the seal 1, the vertices of the support lips 18 may be arranged on a common planar plane.

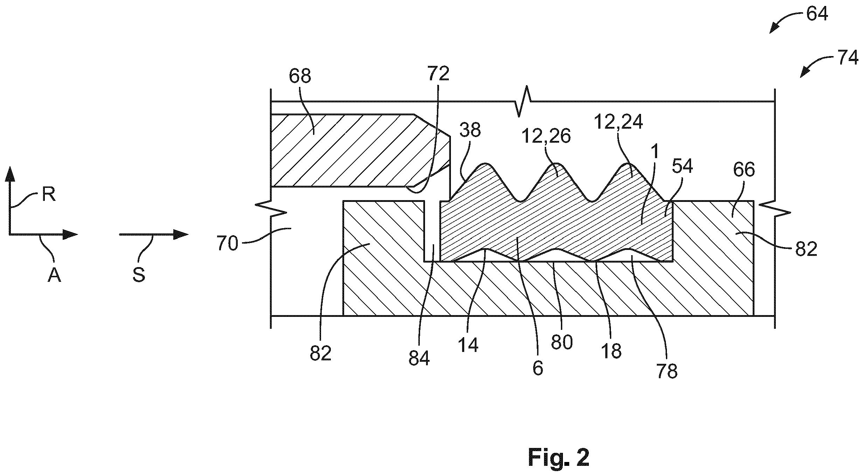

With reference to Figs. 2 and 3, in the following the use and effect of the exemplary embodiment of the seal 1 just described will be explained in more detail for a connector arrangement 64.

For clarity, in Figs. 2 and 3 the components of the connector arrangement 64 are shown only in sections. The connector arrangement 64 includes a connector 66 and a mating connector 68 with a receptacle 70, in which the connector 66 may be received at least in sections. The receptacle 70 is bounded by a wall 72 of the mating connector 68 in the radial direction R.

The mating connector 68 may be connected onto the connector 66 in an insertion direction S. In Fig. 2, the connector arrangement 64 is shown in a non-mated state 74 and in Fig. 3 in a mated state 76.

The electrical connector 66 has a circumferential groove 78, into which the seal 1 is inserted. Here, the seal 1 rests with the support lips 18 in the radial direction R on an outer wall 80 of the connector 66. The recesses 14 form the escape reservoir between the outer wall 80 and the seal 1.

As is evident from Figs. 2 and 3, the connector 66 may have radially outwardly projecting projections 82 that delimit the groove in the axial direction A. In this case, the seal 1 may rest against the corresponding projection 82 with its stop shoulder 54 located at the distal end in the insertion direction S. Consequently, displacement of the seal 1 may be prevented during the mating process. At the opposite axial end, a clearance 84 may be provided between the projection 82 and the stop shoulder 54.

The sealing lips 12 project radially from the groove 78. Upon transferring the connector arrangement 64 into the mated state 76 of Fig. 3, the mating connector 68 slides with its wall 72 past the sealing lips 12 and presses them inwardly in the radial direction R. In the process, the sealing lips 12 may deflect into the escape reservoir provided by the recesses 14, causing the depth 22 of the recesses 14 to decrease. In this process, the force acting on the sealing lips 12 exerted by the mating connector 68 is distributed to the offset support lips 18. The support lips 18 thus act as supports 20 that support the corresponding sealing lip 12. Consequently, a counter pressure of the seal 1 is exerted on the wall 72 of the mating connector 68 via the support lips 18, and the seal 1 is thus pressed between the connector 66 and the mating connector 68 in the mated state 76.

In the advantageous embodiment, it is intended that the seal lips 12 are not deflected in the insertion direction S such that they stick together and form a lump. Instead, an air cushion 86 is created between the adjacent sealing lips 12, thereby providing an advantageous effect on the sealing effect and the service life of the seal 1.

### REFERENCE NUMERALS

- 1: seal
- 2: sealing ring
- 4: radial seal
- 6: monolithic component
- 8: sealing surface
- 10: bearing surface
- 12: sealing lip
- 14: recess

- 18: support lip
- 20: support
- 22: depth
- 24: exterior sealing lip
- 26: central sealing lip
- 28: base
- 30: base
- 32: vertex
- 34: leg
- 36: angle
- 41: base
- 42: height
- 44: escape reservoir
- 46: vanishing line
- 48: vertex
- 50: vanishing line
- 52: axis of symmetry
- 54: stop shoulder
- 56: axial end
- 58: Height
- 60: total height
- 62: distance
- 64: connector arrangement
- 66: electrical connector
- 68: mating connector
- 70: receptacle
- 72: wall
- 74: non-mated state
- 76: mated state
- 78: groove
- 80: outer wall
- 82: projection
- 84: clearance
- 86: air cushion

- A: axial direction
- R: radial direction
- S: insertion direction

## Claims

1. Seal (1) for an electrical connector (66), the seal (1) comprising a sealing surface (8) and a bearing surface (10) opposite the sealing surface (8), the seal (1) having on the sealing surface side a plurality of protruding sealing lips (12) located next to one another and on the bearing surface side a plurality of recesses (14) located next to one another between protruding support lips (18), each sealing lip (12) being opposite a recess (14).

2. Seal (1) according to claim 1, wherein a number of the sealing lips (12) corresponds to a number of the recesses (14).

3. Seal (1) according to claims 1 or 2, wherein the sealing lips (12) comprise vertices (32) that are offset from vertices (48) of the support lips (18).

4. Seal (1) according to claim 3, wherein the vertices (32) of the sealing lips (12) are aligned with bases (30) on the bearing surface side of the recesses (14) and/or the vertices (48) of the support lips (18) are aligned with bases (41) on the sealing surface side between adjacent sealing lips (12).

5. Seal (1) according to any one of claims 1 to 4, wherein the seal (1) is axially symmetric.

6. Seal (1) according to any one of claims 1 to 5, wherein the seal (1) comprises at least one stop shoulder (54) projecting perpendicular to the sealing lips (12).

7. Seal (1) according to claim 6, wherein the at least one stop shoulder (54) is arranged with the support lips (18) on a common plane at the bearing surface (10).

8. Seal (1) according to any one of claims 4 to 7, wherein a height (58) from the vertex (48) of the support lip (18) to the opposite base (30) between two seal lips (12) is greater than a height (42) of the sealing lips (12).

9. Seal (1) according to claim 8, wherein a ratio of the height (58) from the vertex (48) of the support lip (18) to the opposite base (30) to a total height (60) of the seal (1) is 2:3.

10. Seal (1) according to claim 8 or 9, wherein a distance (62) between two adjacent sealing lips (12) is greater than or equal to the height (42) of the sealing lips (12).

11. Seal (1) according to claim 10, wherein the distance (62) between two adjacent sealing lips (12) is at least twice the height (42) of the sealing lips (12).

12. Seal (1) according to any one of claims 1 to 11, wherein the seal (1) comprises at least one asymmetrically configured exterior sealing lip (24) and at least one axially symmetrically configured central sealing lip (26).

13. Seal (1) according to claim 12, wherein the at least one exterior sealing lip (24) comprises a flattened approach bevel (38) facing away from the central sealing lip (26).

14. Seal (1) according to any one of claims 1 to 13, wherein the sealing lips (12) are of equal height.

15. Electrical connector (66) comprising a seal (1) according to any one of claims 1 to 14.
